# EUROPÄISCHE PATENTANMELDUNG

(11) **EP 0 637 479 A1**
(43) Veröffentlichungstag der Anmeldung: **08.02.1995**
(21) Anmeldenummer: 94105724.2
(22) Anmeldetag: 13.04.1994
(51) Int. Cl.: B23D 29/02, H02G 1/00

(54) **Schneidgerät für stangenförmige Werkstücke, insbesondere für laminiertes Flachband**

(30) Priorität: 16.04.1993 DE 4312469
(71) Anmelder: Laux, Friedrich Günther, D-14109 Berlin (DE); Laux, Christian, D-14109 Berlin (DE)
(72) Erfinder: Laux, Friedrich Günther, D-14109 Berlin (DE); Laux, Christian, D-14109 Berlin (DE)
(74) Vertreter: Sperling, Rüdiger, Dipl.-Ing.

(57) **Zusammenfassung**

Bei einem Schneidgerät für stangenförmige Werkstücke, insbesondere für laminiertes Flachband mit einem über ein Getriebe oder ein Triebwerk intermitterend angetriebenen Drehschneider ist am Drehschneider eine im wesentlichen radial verlaufende Schneidkante vorgesehen.

## Beschreibung

Die Erfindung bezieht sich auf ein Schneidgerät für stangenförmige Werkstücke, insbesondere für laminiertes Flachband mit einem über ein Getriebe oder ein Triebwerk intermittierend angetriebenen Drehschneider.

Aus der EP 0 186 222 ist ein handbetätigtes Schneidgerät bekannt, bei dem unter Verwendung eines Exzentertriebwerks ein umlaufendes Drehmesser intermittierend durch Verschwenken eines von zwei vorgesehenen Handhebeln vortreibbar ist, wodurch ein vom Drehmesser umfaßtes, rundes oder annähernd rundes Werkstück, z.B. ein Elektrokabel, getrennt bzw. geschnitten werden kann. Mit diesem Schneidgerät sind keine Werkstücke schneidbar, die einen flachen oder im wesentlichen rechteckigen Querschnitt haben, ohne diesen Querschnitt im Schneidbereich unzulässig zu verformen. Die Schneidenden werden zur Herstellung elektrischer Kabel benötigt.

Der Erfindung liegt die Aufgabe zugrunde, ein Schneidgerät zu schaffen, welches vor allem aufgrund seiner leichten Transportfähigkeit vielfältig auf Montage- und Baustellen eingesetzt werden kann; auch sollen vor allem laminierte Flachbänder unterschiedlicher Abmessung mit einem Mindestmaß an Verformung der Abschnittkante getrennt werden können.

Die Aufgabe wird dadurch gelöst, daß erfindungsgemäß am Drehschneider eine im wesentlichen radial verlaufende Schneidkante vorgesehen ist.

Durch die Verwendung des erfindungsgemäßen Schneidgeräts, welches im übrigen nur ca. 1,6 kg wiegen soll, kann der Monteur im Gegensatz zur Verwendung von pumbenangetriebenen Schneidstanzen auch an vormontierten und nicht abisolierten Flachbandleitern unter räumlich beengten Verhältnissen arbeiten. Die besondere Form des Drehschneiders ergibt beim Schneiden von Flachbändern ein Mindestmaß von Verformungen.

Nach einer bevorzugten Ausführungsform der Erfindung besteht die Schneidkante aus mindestens zwei nebeneinanderliegenden Schneidabschnitten, welche einen unterschiedlich spitzen Winkel einschließen. Besonders bevorzugt sind vier Schneidkantenabschnitte vorgesehen, von denen der erste einen Winkel von 5° - 15°, vorzugsweise 9°30', der zweite einen Winkel von 15° - 30°, vorzugsweise von 22°, der dritte einen Winkel von 25° - 40°, vorzugs-weise 32°30', und der vierte einen Winkel von 40 - 50°, vorzugsweise 44°30' jeweils zur Radialen aufweisen.

Bei Verwendung des Schneidgeräts für laminierte Flachbandleiter wird durch diese Schneidkantenausbildung erreicht, daß der unter dem erheblichen Schneiddruck ausweichenden Isolation Platz gegeben und auch einer seitlichen Abwanderung der untersten Lamellenlage Einhalt geboten wird.

Wenn das erfindungsgemäße Schneidgerät mit einem das Getriebe oder Triebwerk aufweisenden Gehäuse und einer daran angebrachten Handhabe versehen ist, kann entweder, wie an sich bekannt, eine zweite intermittierend verschwenkbare Handhabe vorgesehen sein oder es kann das Gehäuse einen Elektromotor aufweisen und die Handhabe einen Schalter.

Auch durch die Verwendung des Elektromotors als integrierenden Bestandteil des Schneidgeräts wird das Gewicht desselben nicht sehr wesentlich erhöht; die Handlichkeit des Schneidgeräts wird nicht beeinträchtigt, da Elektromotoren auch in der vorgesehenen Größe annähernd der Größe der festen Handhabe entsprechen.

Auch wenn das erfindungsgemäße Schneidgerät bei entsprechender Ausbildung der Werkstückhalterung für Massivwerkstücke mit im wesentlichen rundem oder vieleckigem Querschnitt mit nicht zu großem Durchmesser Verwendung finden kann, erfolgt eine bevorzugte Verwendung für Werkstücke mit einem rechteckigen Querschnitt. In diesem Fall sind zweckmäßigerweise ein L-förmiger Halter am Gehäuse in der Höhe verstellbar und gegenüber der Querseite derselben ein verstellbarer Klemmhebel vorgesehen. Der Klemmhebel kann mit einer Andrückrolle versehen sein, welche auf einer Kurvenbahn des Klemmhebels abrollbar ist.

Es ist auch möglich, daß das Getriebe bzw. Treibwerk in an sich bekannter Weise als Exzentertreibwerk ausgebildet ist.

Zweckmäßigerweise ist der intermittierende Antrieb des Drehschneider nach jeweils einem Eingriff der vortreibenden Zahnklinke in die Außenverzahnung des Drehschneiders durch eine lösbare Halteklinke arretierbar.

Auf der Zeichnung sind Ausführungsbeispiele des erfindungsgemäßen Schneidgeräts dargestellt; sie werden nachfolgend näher beschrieben. Es zeigt:
- Fig. 1: eine Seitenansicht auf eine Ausführungsform des Schneidgeräts,
- Fig. 2: eine Ansicht von der gleichen Seite aus, jedoch ohne Deckplatte,

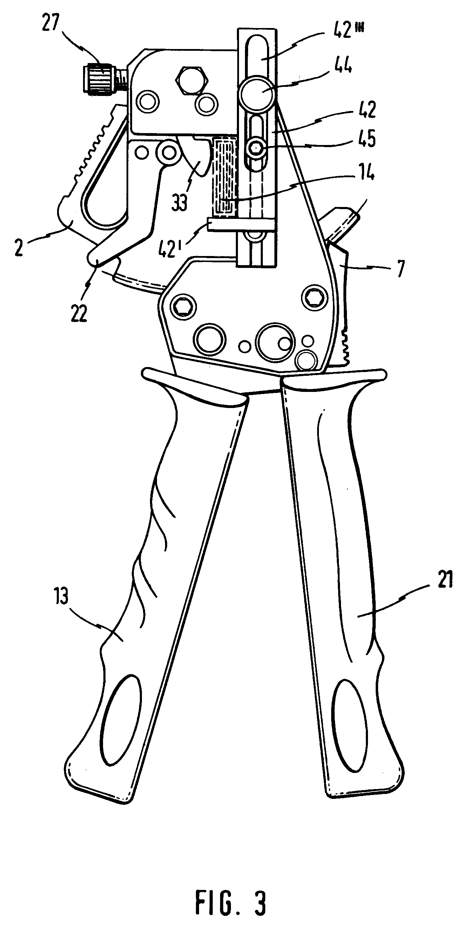

- Fig. 3: eine Ansicht auf dieselbe Ausführungsform von der Fig. 1 gegenüberliegenden Seite aus,

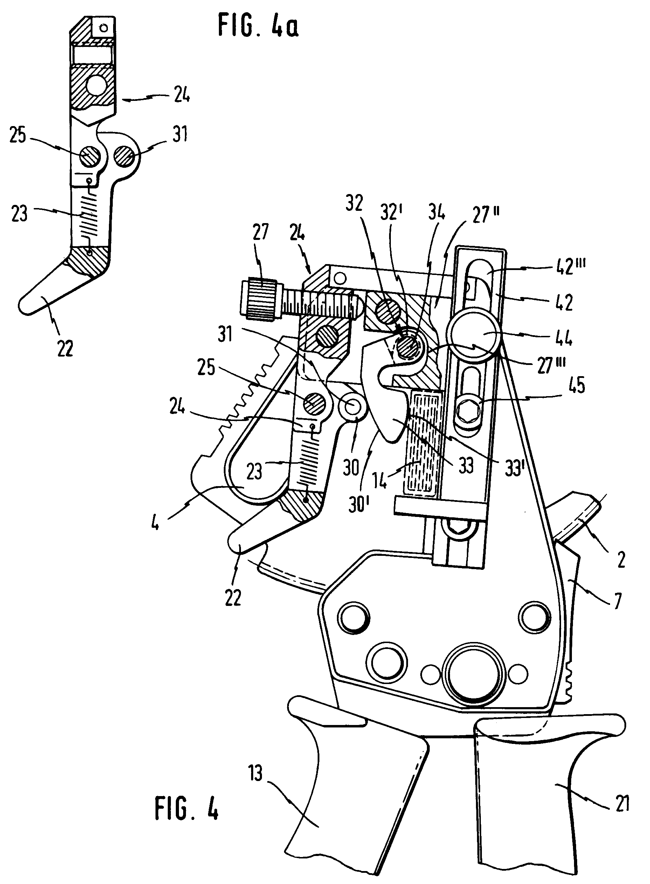

- Fig. 4: eine Ansicht auf die in Fig. 3 gezeigte Seite derselben Ausführungsform unter Weglassung einer oberen Deckplatte des Schneidplattenoberteils,
- Fig. 4a: ein Detail von Fig. 4 in vergrößertem Maßstab,
- Fig. 5: eine Ansicht gemäß Linie 5-5 in Fig. 4,
- Fig. 6: den Drehschneider in Seitenansicht,
- Fig. 6a: einen Schnitt gemäß Linie 6a-6a in Fig. 6,
- Fig. 6b: eine Ansicht in Pfeilrichtung A in Fig. 6,
- Fig. 7: ein Detail des Schneidgeräts,
- Fig. 7a: einen Schnitt gemäß Linie 7a-7a in Fig. 7 und
- Fig. 8: eine Seitenansicht auf eine abgewandelte Ausführungsform der Erfindung.

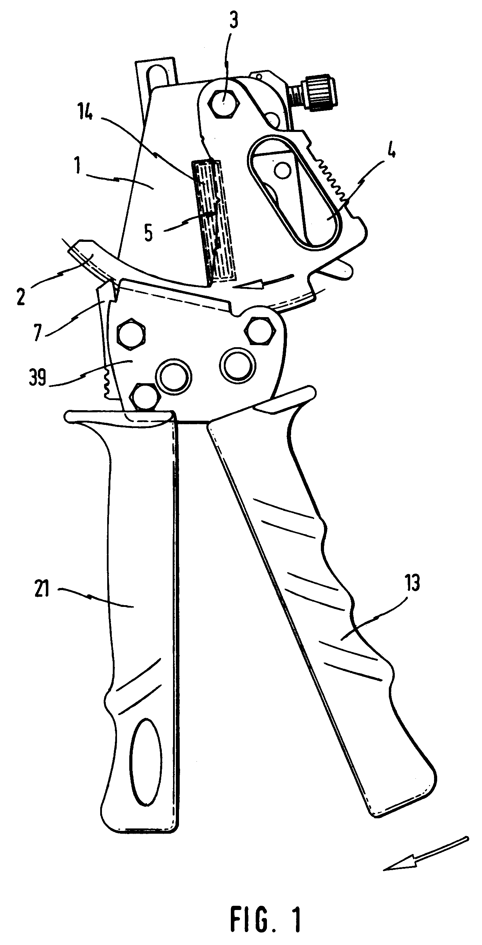

Das annähernd in natürlicher Größe in Fig. 1 dargestellte Schneidgerät ist als Handgerät mit einer verschwenkbaren Handhabe ausgebildet. An einer Schneidplatte 1 ist ein Drehschneider 2 um einen Zapfen 3 drehbar gelagert. Der Drehschneider weist eine Öffnung 4 zum Erfassen von Hand auf und hat eine Schneidkante 5, die weiter unten näher beschrieben wird. Der Drehschneider 2 ist mit einer Zahnklinke 6 intermittierend drehbar. Durch den Eingriff der Zahnklinke 6 wird der Drehschneider um einen gewissen Betrag vorgeschoben. In der vorgeschobenen Stellung greift eine Halteklinke 7 in die Zahnung des Drehschneiders ein und verhindert dessen Rückführung. Der Drehschneider 2 wird nach Beendigung des Schneid- oder Trennvorgangs durch Drücken auf die Halteklinke 7 und Ausschwenken des Handhebels 13 in die Ausgangsstellung zurückgebracht und dort arretiert.

Die Exzentrizität zwischen dem geometrischen Zentrum eines zylindrischen Exzenterbolzens 12 und eines zylindrischen Achsbolzens 11 sorgt dafür, daß die Zahnklinke 6 vorgeschoben wird und somit auch der Drehschneider 2.

Der Exzenterbolzen 12 genau wie der Achsbolzen 11 weisen jeweils ein Nadellager 9 bzw. 10 auf.

Bei Verschwenken der Handhabe 13, die über das Nadellager 10 und den Achsbolzen 11 zwischen der Schneidplatte 1 und der Drehplatte gelagert ist, dreht sich der im Achsbolzen 11 exzentrisch gelagerte Exzenterbolzen 12. Die auf diesem gelagerte Zahnklinke 6 erzeugt den Vortrieb. Bei Rückschwenken der Handhabe 13 löst sich die Zahnklinke 6 aus der Außenverzahnung des Drehschneiders 2 und klinkt in den nächsten Zahn ein, sobald die Endstation der Handhabe 13 erreicht ist.

Die in bezug auf das Gehäuse unbewegliche Handhabe 21 ist mit der Schneidplatte 1 an der Stelle 40 fest verbunden.

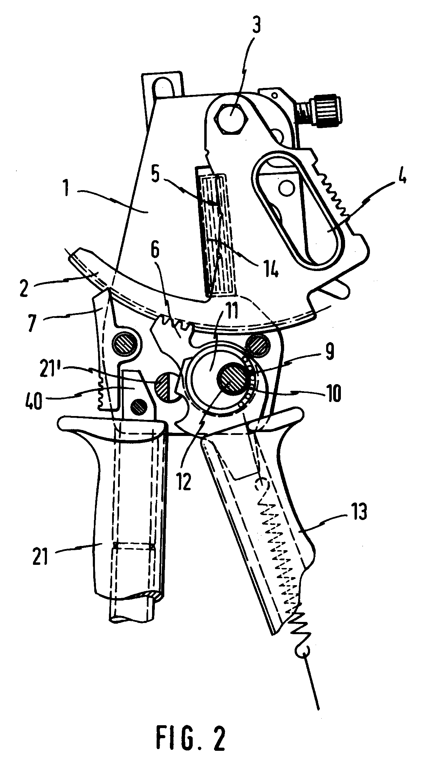

Wie aus Fig. 1 und Fig. 2 ersichtlich ist, sind die ineinandergreifenden beweglichen Teile des Schneidgeräts mit einer unteren Abdeckplatte 39 versehen.

Zum Festhalten eines rechteckigen Werkstücks 14 z.B. eines laminierten Flachbandleiters, ist eine verschiebbare Platte 42 zum Festhalten des Werkstücks 14, z.B. eines laminierten Flachbandleiters, vorgesehen, welche eine in Richtung auf das Werkstück vorkragende Platte 42' aufweist, auf welcher das Werkstück ruht.

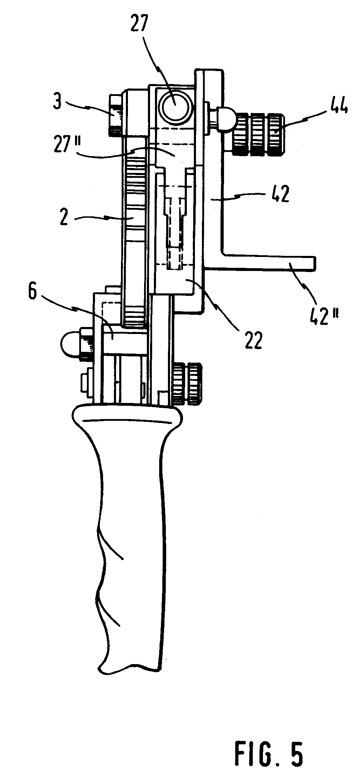

Wie aus Fig. 5 ersichtlich ist, steht eine gegenläufig angeordnete Platte 42'' vom Schieber 42 ab, durch welchen eine Auf- und Abbewegung der Platte 42 von Hand ermöglicht wird. Die Platte 42 weist einen Längsschlitz 42''' auf; in diesem Längsschlitz ist ein Stellknopf 44 vorgesehen, mit welchem die Feststellung der verschiebbaren Platte 42 in der gewünschten Lage erfolgt. Weiterhin ist ein vom Gehäuse vorkragender Bolzen 45 vorgesehen, der die Verschieberichtung der Platte 42 festlegt.

Durch einen Bolzen 27 ist eine U-förmige Platte 27'' gehalten, deren Unterrand 27''' die obere Querseite des Werkstücks 14 abstützt. Mit einer Verstellschraube 27 ist dieses U-förmige Widerlager 27'' unbeweglich gehalten.

Die U-förmige Aussparung 27''' des Widerlagers 27'' nimmt einen Schwenkhebel 33 auf, welcher um ein Gelenk 32 verdrehbar ist und sich mit einem Steg 33' an einer Längsseite des Werkstücks 14 abstützt.

Mit einem Stellhebel 24 ist über die Achse 25 ein Klemmhebel 22 gelenkig verbunden. Er befindet sich in Ruhestellung durch den Zug einer Feder 23 in gestreckter Stellung zum Stellhebel 24, ist aber zur Betätigung um die Achse 25 frei schwenkbar. Der Klemmhebel 22 trägt an seiner dem Klemmstück 33 zugewandten Seite eine Gleitrolle 30, die um die Achse 31 verschwenkbar ist.

Das Klemmstück 33 wird durch eine Schenkelfeder 32' gegen die Gleitrolle 30 gedrückt; es ist über eine Achse 34 in einer Ausfräsung der Schneidplatte 1 gelagert; die obere Abschlußplatte 34 dient auch hier als Gegenlagerung.

Entsprechend der jeweiligen Dicke des zu schneidenden Flachbandes wird die Stellschraube so eingestellt, daß beim Verschwenken des Klemmhebels 22 in Richtung auf das Werkstück hin die Gleitrolle auf der Rampenfläche 30' des Klemmstücks abrollen und hierbei einen erheblichen Anpreßdruck erzeugen kann. Durch entsprechende Formgebung der Rampenfläche 30' erfolgt eine Verriegelung des Klemmhebels in der Endstellung; der Bedienungsmann hat nun beide Hände frei für den folgenden Schneidvorgang.

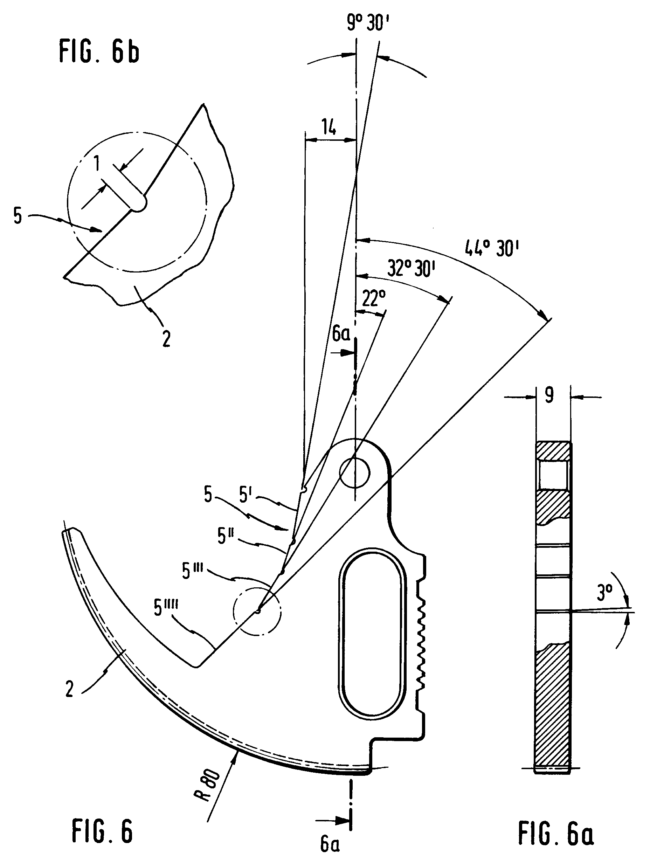

Ein Halbbolzen 21' ermöglicht eine Verriegelung des Exzentertriebwerks in Nichtgebrauchsstellung und hält somit auch die bewegliche Handhabe 13 verriegelt. Der in Fig. 6 dargestellte Drehschneider mit Schneidkante 5 ist einteilig ausgebildet, wobei die Schneidkante 5 vier in bezug aufeinander winklig angeordnete Schneidabschnitte 5', 5'', 5''' und 5'''' aufweist. Wie aus Fig. 6 ersichtlich ist, sind die vier Schneidabschnitte unterschiedlich lang und weisen einen unterschiedlichen Winkel zur Radialen auf.

Der beim Schneidvorgang anfänglich beträchtliche Widerstand nimmt während des Schneidvorgangs ab; hierauf ist die unterschiedliche Länge der Schneidkantenabschnitte zurückzuführen. Gegen Ende des Schneidvorgangs wird der erste Schneidkantenabschnitt 5' selbst eine Abtrennfunktion übernehmen, ohne daß noch eine Verformung des Restteils zu befürchten ist; die Klemmvorrichtung verhindert dann das seitliche Abwandern des Werkstoffs des zu schneidenden Werkstücks.

Fig. 6b zeigt eine Übergangsstelle von einem Schneidkantenabschnitt zum anderen. Auch die kleinen Nutungen unterstützen die Fixierung des Werkstücks und erleichtern die Oberflächenbearbeitung der Schneidkantenabschnitte.

Fig. 6a zeigt im Querschnitt die leichte Neigung von etwa 3° zum besseren Abgleiten des abgeschnittenen Werkstoffs.

Die unterschiedliche Länge und die unterschiedliche Winkelstellung der einzelnen Schneidkantabschnitte hat sich als besonders zweckmäßig erwiesen. Infolge einer Drehbewegung des Drehschneiders mit einer kontinuierlich verlaufenden und gleich gerundeter Schnittkantenkurve würden beachtliche Querkräfte in Richtung auf den Drehpunkt des Drehmessers entstehen, die zu einer Verformung des eingelegten Werkstückes besonders gegen Ende des Schneidvorgangs führten. Zwar mindert eine kräftig fixierende Klemmvorrichtung diese Wirkung, aber eine wesentliche Verbesserung der Formerhaltung und der Schnittqualität wurde erst durch die in unterschiedlichen Winkeln zueinander verlaufenden Schnittkantenabschnitte erreicht.

Bei dem dargestellten Drehschneider mit der Verzahnung 2 sind beispielsweise Maßangaben eingetragen, die sich auf einen Drehschneider mit einem Radius von 75 mm beziehen; Abwandlungen in der Größe des Drehschneiders, in der Länge der Verzahnung, der Länge der einzelnen Schneidkantenabschnitte und deren Winkel zur Radialen sind entsprechend dem zu schneidenden Material und gegebenenfalls dessen Querschnitt ohne weiteres möglich.

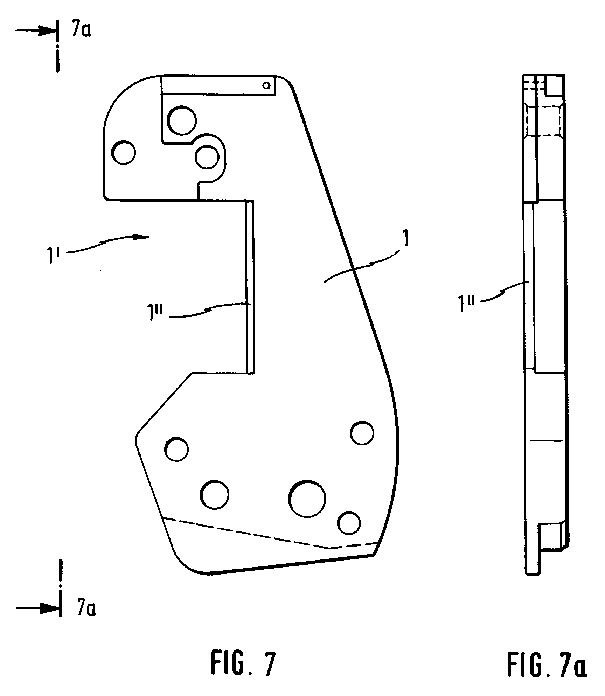

Die in Fig. 7 dargestellte Schneidplatte 1 weist eine seitliche Ausfräsung 1' zur Aufnahme des Werkstücks auf, deren Grundfläche als Schneidkante 1'' ausgebildet ist, welche mit den Schneidkantenabschnitten des Drehschneiders zusammenwirkt. Statt der Ausfräsung kann in der Schneidplatte 1 auch ein Fenster vorgesehen sein. In diesem Fall ist die Breite des gegebenenfalls rechtwinkligen Werkstücks allerdings begrenzt.

Das Schneidmesser bzw. das Drehmesser ist relativ leicht auswechselbar im Schneidgerät enthalten, so daß auch mehrere verschiedenartige Drehmesser gleichzeitig mit dem Gerät geliefert werden können.

Fig. 7 zeigt einen Querschnitt der feststehenden Schneidplatte 1. Die etwa unter 4° abgewinkelte Schneide liegt etwas oberhalb der seitlichen, bis über den Schieber bzw. die Platte 22 forgesetzten Auflagefläche für den laminierten Flachbandleiter. Hierdurch wird der unter dem erheblichen Schnittdruck ausweichenden Isolation Platz gegeben und auch einer seitlichen Abwanderung der untersten Lamellenlage Einhalt geboten. Somit ist auch die Ausbildung der Schneidplatte 1 bzw. der vorgesehenen Öffnung zur Aufnahme des Werkstücks besonderes Gewicht beizumessen.

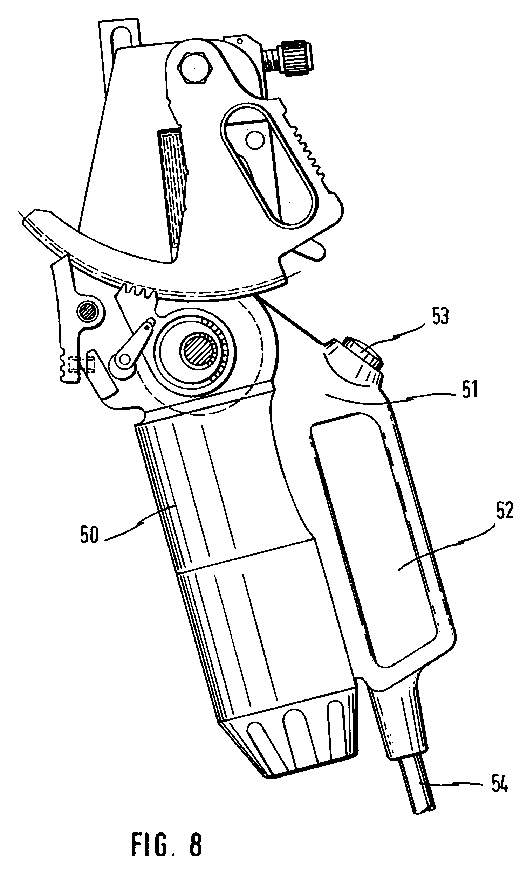

In Fig. 8 ist eine Abwandlung des erfindungsgemäßen Schneidgeräts dargestellt. Unter Beibehaltung des oberen Teils der Schneidvorrichtung mit dem Exzentertrieb ist statt des beweglichen Schwenkarmes 13 ein Elektromotor 50 vorgesehen, welcher mit der Handhabe 51 fest verbunden ist. Die Handhabe mit der elektrischen Zuleitung 54 weist eine Öffnung 52 zum Hereingreifen mit der Hand und einen Handschalter 53 für den Elektromotor auf.

Der Ordnung halber ist darauf hinzuweisen, daß statt dem dargestellten Exzentertriebwerk auch jedes andere Getriebe z.B. ein Schneckentriebwerk oder auch ein Klinkengetriebe vorgesehen sein kann; es ist jedoch darauf zu achten, daß die einzelnen Vortriebschritte nicht zu groß sind, um eine möglichst große Kraftübertragung zu gewährleisten.

## Patentansprüche

1. Schneidgerät für stangenförmige Werkstücke, insbesondere für laminiertes Flachband mit einem über ein Getriebe oder ein Triebwerk intermittierend angetriebenen Drehschneider, **dadurch gekennzeichnet**, daß am Drehschneider eine im wesentlichen radial verlaufende Schneidkante vorgesehen ist.

2. Schneidgerät nach Anspruch 1, **dadurch gekennzeichnet**, daß die Schneidkante aus mindestens zwei nebeneinanderliegenden Schneidabschnitten besteht, welche einen unterschiedlich spitzen Winkel zur Radialen einschließen.

3. Schneidgerät nach Anspruch 2, dadurch gekennzeichnet, daß vier Schneidkantenabschnitte vorgesehen sind, von denen der erste einen Winkel von 5° - 15°, vorzugsweise 9°30', der zweite einen Winkel von 15° - 30°, vorzugsweise von 22°, der dritte einen Winkel von 25° - 40°, vorzugsweise 32°30', und der vierte einen Winkel von 40 - 50°, vorzugsweise 44°30' jeweils zur Radialen aufweisen.

4. Schneidgerät nach einem der Ansprüche 1 bis 3 mit einem das Getriebe bzw. Triebwerk aufweisenden Gehäuse und einer daran angebrachten Handhabe, **dadurch gekennzeichnet**, daß - wie an sich bekannt - eine zweite intermittierend verschwenkbare Handhabe vorgesehen ist.

5. Schneidgerät nach einem der Ansprüche 1 bis 3 mit einem das Getriebe bzw. Triebwerk aufweisenden Gehäuse und einer daran angebrachten Handhabe, **dadurch gekennzeich**net, daß am Gehäuse ein Elektromotor angebracht ist und die Handhabe einen Schalter aufweist.

6. Schneidgerät nach einem der Ansprüche 1 bis 5 für Werkstücke mit einem im wesentlichen rechteckigen Querschnitt, **dadurch gekennzeichnet**, daß ein L-förmiger Halter am Gehäuse in der Höhe verstellbar und gegenüber der Querseite derselben ein verstellbarer Klemmhebel vorgesehen sind.

7. Schneidgerät nach Anspruch 6, **dadurch gekennzeichnet**, daß der Klemmhebel mit einer Andrückrolle versehen ist, welche auf einer Kurvenbahn des Klemmstückes abrollbar ist.

8. Schneidgerät nach einem der Ansprüche 1 bis 7, **dadurch gekennzeichnet**, daß das Getriebe bzw. das Triebwerk in an sich bekannter Weise als Exzentertriebwerk ausgebildet ist.

9. Schneidgerät nach Anspruch 8, **dadurch gekennzeichnet**, daß der intermittierende Antrieb des Drehschneiders nach jeweils einem Eingriff der vortreibenden Zahnklinke in die Außenverzahnung des Drehschneiders durch eine lösbare Halteklinke arretierbar ist.
